# FASCICULE DE BREVET EUROPEEN

(11) **EP 0 621 300 B1**
(45) Date de publication et mention de la délivrance du brevet: **30.09.1998**
(21) Numéro de dépôt: 94400831.7
(22) Date de dépôt: 15.04.1994
(51) Int. Cl.: C08G 73/10, C08G 69/10, C11D 3/37

(54) **Acide polyanhydroaspartique et ses hydrolysats biodégradables**
Polyanhydroasparaginsäure und seine bioabbaubaren Hydrolyseprodukte
Polyanhydroaspartic acid and its biodegradable hydrolysats

(30) Priorité: 23.04.1993 FR 9304815
(43) Date de publication de la demande: 26.10.1994
(73) Titulaire: RHODIA CHIMIE, 92408 Courbevoie Cédex (FR)
(72) Inventeur: Lepage, Jean-Luc, F-69340 Francheville (FR); Charpennel, Maurice, F-69004 Lyon (FR); Bossennec, Véronique, F-69360 Serezin du Rhône (FR)
(74) Mandataire: Seugnet, Jean Louis

(56) Documents cités:
- EP-A- 0 511 037
- WO-A-87/03891
- WO-A-89/01005
- WO-A-92/14753
- DD-A- 262 665
- DE-A- 2 253 190
- GB-A- 2 246 786

## Description

La présente invention a pour objet un procédé de préparation d'acide polyanhydroaspartique polymère ou copolymère et de ses hydrolysats biodégradables à au moins 90% ± 5%, mesuré selon la norme AFNOR T90-312.

L'acide polyanhydroaspartique, appelé également acide polydéshydroaspartique ou simplement polysuccinimide, est le plus souvent préparé par condensation thermique de l'acide aspartique à une température de l'ordre de 220 à 230°C, pendant plusieurs heures. Il a été constaté que les hydrolysats (polyaspartates) obtenus par addition d'un agent basique audit acide polyanhydroaspartique ainsi obtenu, présentent une biodégradabilité en milieu naturel ne dépassant généralement pas 75% (EP-A-511 037).

Des polypeptides carboxylés hydrosolubles biodégradables dérivés d'acide polyaspartique ou polyglutamique sont décrits dans WO 87/03891.

La demanderesse a maintenant trouvé un procédé de préparation d'acide polyanhydroaspartique dont les hydrolysats présentent une biodégradabilité en milieu naturel d'au moins 90% ± 5%.

Il s'agit d'un procédé de préparation d'acide polyanhydroaspartique et de ses hydrolysats biodégradables en milieu naturel à au moins 90% ± 5%, par polymérisation thermique de l'acide aspartique éventuellement en mélange avec un autre aminoacide, puis hydrolyse éventuelle, ledit procédé étant caractérisé en ce que ladite opération de polymérisation est réalisée en présence d'au moins une quantité efficace d'un dérivé du bore présentant au moins une liaison B-OH ou d'un précurseur dudit dérivé du bore.

Parmi les aminoacides pouvant être copolymérisés avec l'acide aspartique, on peut citer les suivants : acide glutamique, glycine, alanine, valine, leucine, isoleucine, phenylalanine, méthionine, histidine, proline, lysine, sérine, thréocine, cystéine ..., et ce quantité pouvant aller jusqu'à 15% en poids, de préférence jusqu'à 5% en poids par rapport au poids total de monomères.

On entend par précurseur dudit dérivé du bore, tout composé qui, dans les conditions de la réaction, s'hydrolyse en formant un dérivé du bore présentant au moins une liaison B-OH.

Parmi les dérivés du bore à liaison B-OH ou précurseurs de dérivé du bore à liaison B-OH, pouvant être mis en oeuvre, on peut citer :
. les acides boriques (ortho-, méta- ou hypo- borique)
. les acides boroniques
. l'anhydride borique
. les esters boriques tels que ceux de propyle, de butyle ...contenant 1 ou 2 groupes B-OH, B-H ou B-Cl
. les boranes métalliques tels que K₂B₂H₆
. les halogénures de bore (chlorure, bromure, iodure)
. le chlore boraxole
. les halogénoboranes, chloroboranes notamment
. les organohalogénoboranes, organochloroboranes notamment, présentant un radical organique en C₁-C₂₀ alkyle ou aryle
. les esters aminoboriques
. les aminohalogénoboranes, aminochloroboranes notamment
. le borazol
. les trihalogénoborazols, trichloroborazols notamment
. les organoboroxols présentant un radical organique en C₁-C₂₀ alkyle ou aryle
. les organoborazols présentant un radical organique en C₁-C₂₀ alkyle ou aryle...

Le dérivé du bore préférentiellement mis en oeuvre est l'acide borique H₃BO₃. ou l'anhydride borique B₂O₃.

L'opération de condensation peut être réalisée à une température de l'ordre de 130 à 300°C, de préférence de l'ordre de 160 à 220°C, et tout particulièrement de l'ordre de 170 à 210°C. La durée de cette opération est fonction de la température mise en oeuvre; celle-ci est généralement de l'ordre de 2 à 8 heures à une température de l'ordre de 170 à 210°C.

Le dérivé du bore peut être présent en quantité correspondant à un rapport dérivé du bore / acide aspartique + autre(s) acide(s) aminé(s), exprimé en atome-gramme de B / fonction COOH de l'ordre de 10/1 à 1/20, de préférence de l'ordre de 3/2 à 1/4 et plus particulièrement de 1/1 à 1/2.

Si désiré, le dérivé du bore peut être éliminé par lavage à l'eau ou par extraction à l'aide d'un solvant adapté.

Dans le cadre de la présente invention, l'acide polyanhydroaspartique se présente généralement sous la forme d'une masse solide . Dans le cas particulier de H₃BO₃, il s'agit d'un solide friable . Si à la fin de la polymérisation, on opte pour une étape de purification, cette étape est réalisée sans difficulté quelconque. Elle nécessite seulement un apport d'eau au milieu de réaction, une filtration subséquente et le séchage de l'acide polyanhydroaspartique ainsi récupéré.

L'acide polyanhydroaspartique obtenu selon l'invention, présente une coloration quasiment blanche. son indice de viscosité , après mise en solution dans la soude 0,5N, est généralement de l'ordre de 12 à 20 ml/g.

Il est bien entendu possible de procéder, le cas échéant, au terme du procédé selon l'invention, à une étape supplémentaire de blanchiment de l'acide polyanhydroaspartique aspartique. Cette décoloration est réalisée de préférence avec des agents oxydants de type eau oxygénée, hypochlorites, perborates, persels (persulfates) ...

Selon un mode de décoloration préféré, on utilise l'eau oxygénée.

L'acide polyanhydroaspartique obtenu, séparé ou non, peut ensuite, être hydrolysé de préférence par addition d'un agent basique (base alcaline, alcalino-terreuse, carbonate alcalin ou alcalino-terreux ...)en présence d'eau si nécessaire, en milieu homogène ou biphasique ; l'hydrolysat ainsi obtenu est constitué de polyaspartate (de sodium par exemple).

La forme acide de l'hydrolysat peut être obtenue par exemple par neutralisation du sel obtenu ci-dessus par hydrolyse alcaline, à l'aide d'un acide organique ou minéral (HCI notamment) ; l'hydrolysat ainsi obtenu est constitué d'acide polyaspartique.

On entend par "hydrolysat", selon l'invention, le produit obtenu par hydrolyse (par action de l'eau) partielle ou totale de l'acide polyanhydroaspartique formé ; cette hydrolyse conduit par ouverture des cycles imides, à la formation de fonctions amides d'une part et de fonctions acides carboxyliques ou sels d'acides carboxyliques d'autre part.

L'acide polyanhydroaspartique et ses hydrolysats ainsi obtenus peuvent être utilisés comme "builder" ou "cobuilder" dans le domaine de la détergence. On entend par "builder" ou "cobuilder" tout constituant qui améliore les performances des agents de surface d'une composition détergente.

La quantité d'acide polyanhydroaspartique ou d'hydrolysat entrant dans les compositions détergentes peut aller de 0,2 à 80%, de préférence de 2 à 10% du poids de ladite composition détergente.

L'exemple présenté ci-après à titre non limitatif de la présente invention, permettra de mettre en évidence d'autres avantages de celle-ci.

### EXEMPLE

Les essais dont les résultats sont présentés dans le tableau ci-après ont été réalisés en utilisant à titre de dérivé du bore, l'acide borique H₃BO₃. ou l'anhydride borique B₂O₃.

Chaque essai a été effectué en évaporateur rotatif, chauffé à l'aide d'un bain d'huile et sous léger balayage d'azote. L'eau de condensation est éliminée par vaporisation au fur et à mesure de sa formation.

Le dérivé du bore, est éliminé à la fin de la réaction de polymérisation par simple mise en suspension du milieu réactionnel dans l'eau. L'acide polyanhydroaspartique est ensuite récupéré par filtration, lavé à l'eau et séché.

A titre comparatif, des essais de polymérisation ont été réalisés à des températures de chauffage supérieures et en absence de tout dérivé du bore.

Le tableau suivant rend compte des résultats obtenus de même que des différents paramètres opératoires à savoir concentration en acide aspartique, en acide borique ou anhydride borique, température de chauffage (température du bain) et durée de chauffage sélectionnés pour chacun des essais.

Les acides polyaspartiques, obtenus à l'issue de chacun des procédés, ont été caractérisés par:
* leur % de groupements NH ("motifs non conformes") de leurs motifs imides par rapport à l'ensemble des groupements CH de leurs motifs succinimides ; ce taux est déterminé par RMN du proton, en effectuant le rapport des intégrales des signaux du proton de groupements NH imides (δ=11,6 ppm) et des signaux du proton de groupements CH succinimides (δ=5,2 ppm), les spectres étant enrégistrés à 300 MHz après solubilisation de l'acide polyanhydroaspartique dans le DMSO (diméthyl sulfoxyde)
* le % de groupements amides primaires ("motifs non conformes") par rapport aux groupements amides secondaires des motifs aspartiques des hydrolysats (PANa) ; ce taux est déterminé par RMN du proton, en effectuant le rapport des intégrales des signaux du proton de groupements amides primaires -CO-NH₂ (δ=6,8 à 7,8 ppm) et des signaux du proton de groupements amides secondaires -CO-NH (δ=8,0 à 8,6 ppm) des chaînes de polyaspartate, les spectres étant enrégistrés à 300 MHz après solubilisation de l'acide polyanhydroaspartique dans un mélange H₂O / D₂O (95 / 5), le pH étant ajusté à 5 environ.
* leur nombre de motifs actifs
* leur indice de viscosité dans la soude
* la biodégradabilité de leur hydrolysat (polyaspartate)
* leur degré de coloration
qui ont respectivement été déterminés selon les méthodologies suivantes :
- Le nombre de motifs actifs ( m. équivalents/Kg anhydride polyaspartique (APA)), c'est à dire le nombre de motifs saponifiables en COO⁻, est déterminé par dosage potentiomètrique en retour. Le dosage est effectué comme suit: On ajoute un excès de NaOH N, on attend 1 heure et on dose en retour avec du HCl N.
Le nombre théorique d'équivalents COO⁻/kg de APA est de 10,3.
L'indice de viscosité (IV) donné dans cet exemple est mesuré à l'aide d'un viscosimètre capillaire SCHOTT AVS 350 à partir d'une quantité d'acide polyanhydroaspartique (APA) mis en solution dans de la soude 0,5N de manière à avoir une concentration de 0,002 g/ml à une température de 25°C.
La biodégradabilité des hydrolysats (polyaspartate de sodium PANa) est mesurée selon la norme AFNOR T90-312 (en conformité avec la norme internationale ISO 7827 du 15 octobre 1984).
Le test est réalisé à partir :
- d'un inoculum obtenu par filtration d'eau d'entrée de la station urbaine de Saint Germain au Mont d'Or (Rhône), tel quel ou après adaptation
- d'un milieu d'essai contenant 4x10⁵ bactéries/ml
- d'une quantité de produit à tester telle que le milieu d'essai contienne une concentration en carbone organique de de l'ordre de 40ml/g.
Le taux de biodégradabilité est mesuré en fonction du temps dans les conditions de rejet en eau de rivière.
Pour cette mesure les échantillons testés ont été obtenus par hydrolyse par une solution diluée de soude des APA préparés, jusqu'à obtenir une solution à 6% environ PANa, de pH de l'ordre de 9 à 11.
Le niveau de biodégradabilité est caractérisé par les deux paramètres suivants :
. le taux maximum de biodégradation (TMB)
. le temps nécessaire pour passer d'un taux de biodégradation de 10% à un taux de 90% du taux maximum de biodégradation (t 10-90).

- Le niveau de coloration des produits obtenus avant et après élimination du dérivé du bore par lavage a été déterminé sur spectrocolorimètre selon la méthode de HUNTER L.a.b..

L'ensemble des résultats obtenus, montre que l'incorporation de H₃BO₃, ou de B₂O₃ lors de la condensation de l'acide aspartique, permet d'obtenir des acides polyanhydroaspartiques au moins équivalents, au niveau de l'indice de viscosité, à ceux obtenus par condensation thermique, mais à des températures nettement plus faibles, de l'ordre de 30 à 50°C. En outre, comparés à ceux obtenus par voie purement thermique, ces anhydrides polyaspartiques ou leurs hydrolysats :
- sont nettement moins colorés.
- présentent un indice de viscosité supérieur, bien que préparés à une température de condensation inférieure
- présentent une biodégradabilité nettement améliorée

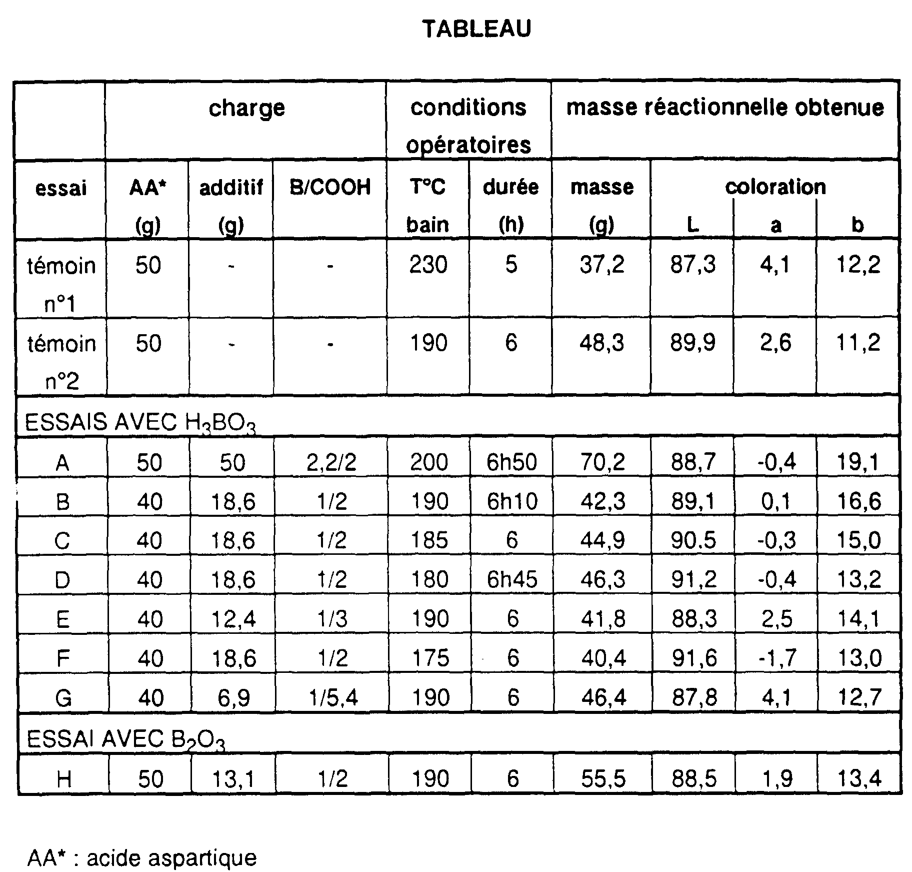

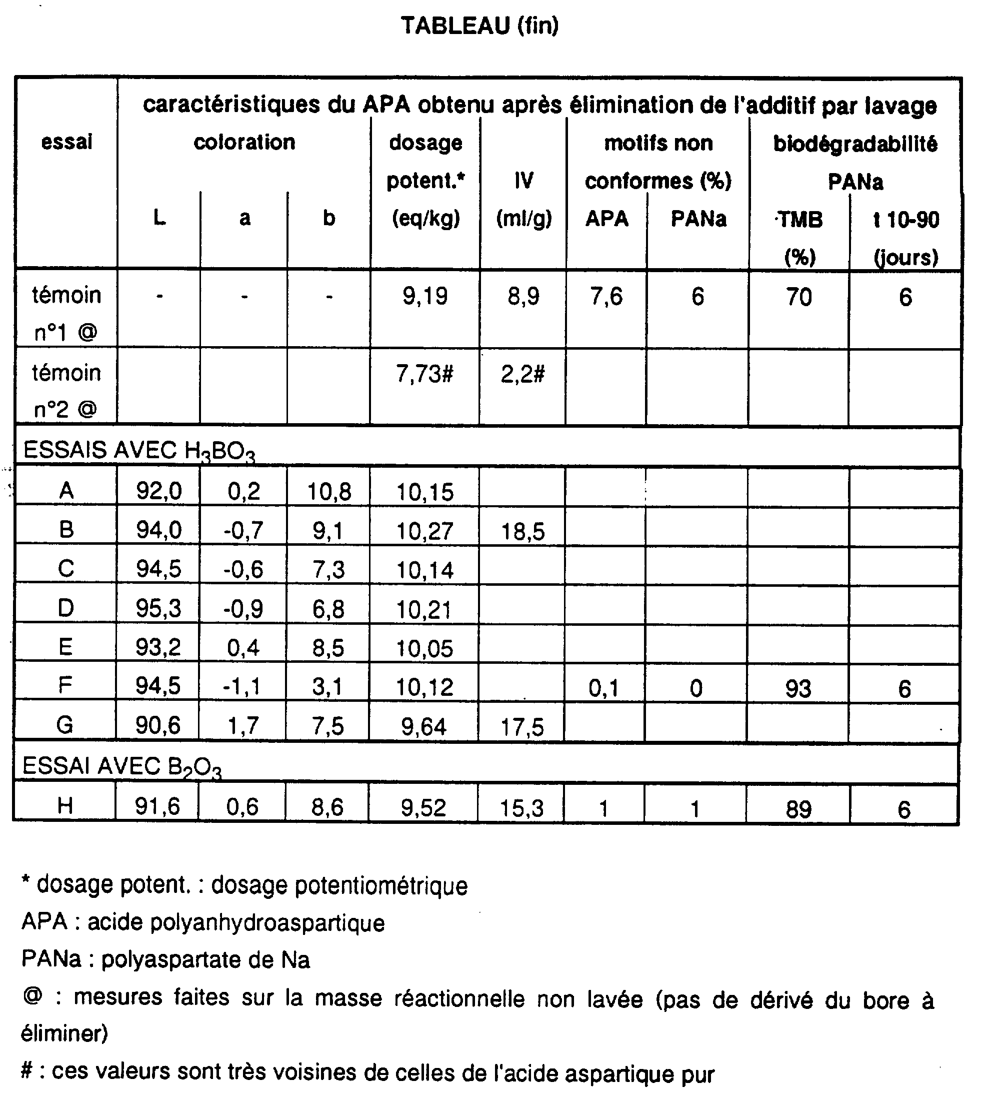

## Revendications

1. Procédé de préparation d'acide polyanhydroaspartique et de ses hydrolysats biodégradables en milieu naturel à au moins 90% ± 5%, mesuré selon la norme AFNOR T90-312 par polymérisation thermique de l'acide aspartique éventuellement en mélange avec un autre aminoacide, puis hydrolyse éventuelle, ledit procédé étant caractérisé en ce que ladite opération de polymérisation est réalisée en présence d'au moins une quantité efficace d'un dérivé du bore présentant au moins une liaison B-OH ou d'un précurseur dudit dérivé du bore.

2. Procédé selon la revendication 1), caractérisé en ce que le ou les aminoacides éventuellement copolymérisés avec l'acide aspartique sont l'acide glutamique, la glycine, l'alanine, la valine, la leucine, l'isoleucine, la phenylalanine, la méthionine, l'histidine, la proline, la lysine, la sérine, la thréocine, la cystéine

3. Procédé selon la revendication 1) ou 2) caractérisé en ce que l'opération de polymérisation est réalisée à une température de l'ordre de 130 à 300°C, de préférence de l'ordre de 160 à 220°C et tout particulièrement de l'ordre de 170 à 210°C.

4. Procédé selon l'une quelconque des revendications 1) à 3) caractérisé en ce que le dérivé du bore est présent en quantité correspondant à un rapport dérivé du bore / acide aspartique + autre(s) acide(s) aminé(s), exprimé en atome-gramme de B / fonction COOH de l'ordre de 10/1 à 1/20, de préférence de l'ordre de 3/2 à 1/4 et plus particulièrement de 1/1 à 1/2.

5. Procédé selon l'une quelconque des revendications 1) à 4) caractérisé en ce que les dérivés du bore à liaison B-OH ou précurseurs de dérivé du bore à liaison B-OH sont
. les acides boriques (ortho-, méta- ou hypo- borique)
. les acides boroniques
. l'anhydride borique
. les esters boriques tels que ceux de propyle, de butyle ...contenant 1 ou 2 groupes B-OH, B-H ou B-Cl
. les boranes métalliques tels que K₂B₂H₆
. les halogénures de bore (chlorure, bromure, iodure)
. le chlore boraxole
. les halogénoboranes, chloroboranes notamment
. les organohalogénoboranes, organochloroboranes notamment, présentant un radical organique en C₁-C₂₀ alkyle ou aryle
. les esters aminoboriques
. les aminohalogénoboranes, aminochloroboranes notamment
. le borazol
. les trihalogénoborazols, trichloroborazols notamment
. les organoboroxols présentant un radical organique en C₁-C₂₀ alkyle ou aryle
. les organoborazols présentant un radical organique en C₁-C₂₀ alkyle ou aryle

6. Procédé selon la revendication 5) caractérisé en ce que les dérivés du bore à liaison B-OH ou précurseurs de dérivé du bore à liaison B-OH sont l'acide borique H₃BO₃. ou l'anhydride borique B₂O₃.

7. Procédé selon l'une quelconque des revendications 1) à 6) caractérisé en ce que l'acide polyanhydroaspartique, récupéré à l'issu de la polymérisation, subit une étape de purification pour éliminer le dérivé du bore.

8. Procédé selon la revendication 6) caractérisé en ce que l'acide polyanhydroaspartique, récupéré à l'issu de la polymérisation, subit une étape de lavage aqueux, suivi d'une étape de filtration et de séchage.

9. Procédé selon l'une quelconque des revendications 1) à 8) caractérisé en ce que l'acide polyanhydroaspartique, récupéré à la fin de la polymérisation, subit en outre une étape de blanchiment.

10. Procédé selon la revendication 9) caractérisé en ce que l'étape de blanchiment met en oeuvre un oxydant de type eau oxygénée, hypochlorite, perborate, persels.

## Patentansprüche

1. Verfahren zur Herstellung von Polyanhydroasparaginsäure und ihren im natürlichen Milieu zu mindestens 90 % ± 5 %, gemessen nach der Norm AFNOR T90-312, bioabbaubaren Hydrolysaten durch thermische Polymerisation von Asparaginsäure, gegebenenfalls in Mischung mit einer anderen Aminosäure, und anschließende eventuelle Hydrolyse, wobei das genannte Verfahren dadurch gekennzeichnet ist, daß die genannte Operation der Polymerisation in Anwesenheit von mindestens einer wirksamer Menge eines Borderivates, das mindestens eine Bindung B-OH aufweist oder eines Vorläufers des genannten Borderivates realisiert wird.

2. Verfahren nach Anspruch 1, dadurch gekennzeichnet, daß die gegebenenfalls mit der Asparaginsäure copolymerisierte(n) Aminosäure(n) Glutaminsäure, Glycin, Alanin, Valin, Leucin, Isoleucin, Phenylalanin, Methionin, Histidin, Prolin, Lysin, Serin, Threocin oder Cystein sind.

3. Verfahren nach Anspruch 1 oder 2, dadurch gekennzeichnet, daß die Operation der Polymerisation bei einer Temperatur in der Größenordnung von 130 °C bis 300 °C, vorzugsweise in der Größenordnung von 160 °C bis 220 °C, und ganz besonders bevorzugt in der Größenordnung von 170 °C bis 210 °C realisiert wird.

4. Verfahren nach irgendeinem der Ansprüche 1 bis 3, dadurch gekennzeichnet, daß das Borderivat in einer Menge anwesend ist, die einem Verhältnis Borderivat/Asparaginsäure + andere Aminosäure(n), ausgedrückt in Grammatom B/Funktion COOH, in der Größenordnung von 10/1 bis 1/20, vorzugsweise in der Größenordnung von 3/2 bis 1/4 und ganz besonders bevorzugt in der Größenordnung von 1/1 bis 1/2 entspricht.

5. Verfahren nach irgendeinem der Ansprüche 1 bis 4, dadurch gekennzeichnet, daß die Borderivate mit der Bindung B-OH oder die Vorläufer des Borderivates mit der Bindung B-OH sind:
. die Borsäuren (ortho-, meta- oder hypo-Borsäure),
. die Boronsäuren,
. das Borsäureanhydrid,
. die Borsäureester wie die von Propyl, Butyl ..., die ein oder zwei Gruppen B-OH, B-H oder B-Cl enthalten,
. die Metallborane wie K₂B₂H₆,
. die Borhalogenide (Chlorid, Bromid, Iodid),
. das Chlorboraxol,
. die Halogenborane, insbesondere die Chlorborane,
. die Organohalogenborane, insbesondere die Organochlorborane, die einen organischen Rest Alkyl oder Aryl mit 1 bis 20 Kohlenstoffatomen aufweisen,
. die Aminoborsäureester,
. die Aminohalogenborane, insbesondere die Aminochlorborane,
. das Borazol,
. die Trihalogenborazole, insbesondere die Trichlorborazole,
. die Organoboroxole, die einen organischen Rest Alkyl oder Aryl mit 1 bis 20 Kohlenstoffatomen aufweisen,
. die Organoborazole, die einen organischen Rest Alkyl oder Aryl mit 1 bis 20 Kohlenstoffatomen aufweisen.

6. Verfahren nach Anspruch 5, dadurch gekennzeichnet, daß die Borderivate mit der Bindung B-OH oder die Vorläufer des Borderivates mit der Bindung B-OH die Borsäure H₃BO₃ oder das Borsäureanhydrid B₂O₃ sind.

7. Verfahren nach irgendeinem der Ansprüche 1 bis 6, dadurch gekennzeichnet, daß die am Ende der Polymerisation gewonnene Polyanhydroasparaginsäure einer Stufe der Reinigung unterzogen wird, um das Borderivat zu entfernen.

8. Verfahren nach Anspruch 6, dadurch gekennzeichnet, daß die am Ende der Polymerisation gewonnene Polyanhydroasparaginsäure einer Stufe der wäßrigen Waschung unterzogen wird, gefolgt von einer Stufe der Filtration und der Trocknung.

9. Verfahren nach irgendeinem der Ansprüche 1 bis 8, dadurch gekennzeichnet, daß die am Ende der Polymerisation gewonnene Polyanhydroasparaginsäure außerdem einer Stufe des Bleichens unterzogen wird.

10. Verfahren nach Anspruch 9, dadurch gekennzeichnet, daß in der Stufe des Bleichens ein Oxidationsmittel vom Typ Wasserstoffperoxid, Hypochlorit, Perborat oder der Persalze eingesetzt wird.

## Claims

1. Process for the preparation of polyanhydroaspartic acid and of its hydrolysates which are biodegradable in a natural medium of at least 90% ± 5%, measured according to AFNOR standard T90-312, by thermal polymerization of aspartic acid, optionally mixed with another amino acid, and optionally followed by hydrolysis, the said process being characterized in that the said polymerization operation is carried out in the presence of at least an effective quantity of a boron derivative having at least one B-OH bond or of a precursor of the said boron derivative.

2. Process according to claim 1, characterized in that the amino acid(s) optionally copolymerized with aspartic acid is (are) glutamic acid, glycine, alanine, valine, leucine, isoleucine, phenylalanine, methionine, histidine, proline, lysine, serine, threonine, cysteine.

3. Process according to claim 1 or 2, characterized in that the polymerization operation is carried out at a temperature of the order of 130 to 300°C, preferably of the order of 160 to 220°C and most particularly of the order of 170 to 210°C.

4. Process according to any one of claims 1 to 3, characterized in that the boron derivative is present in a quantity corresponding to a boron derivative/aspartic acid + other amino acid(s) ratio, expressed in gram-atoms of B/COOH function, of the order of 10/1 to 1/20, preferably of the order of 3/2 to 1/4 and more particularly from 1/1 to 1/2.

5. Process according to any one of claims 1 to 4, characterized in that the boron derivatives containing a B-OH bond or precursors of a boron derivative containing a B-OH bond are
. boric acids (ortho-, meta- or hypo-boric)
. boronic acids
. boric anhydride
. boric esters such as the propyl, butyl, etc., esters containing 1 or 2 B-OH, B-H or B-Cl groups
. metal boranes such as K₂B₂H₆
. boron halides (chloride, bromide, iodide)
. chlorine boraxole
. haloboranes, in particular chloroboranes
. organohaloboranes, in particular organochloroboranes, having a C₁-C₂₀ alkyl or aryl organic radical
. aminoboric esters
. aminohaloboranes, in particular aminochloroboranes
. borazole
. trihaloborazoles, in particular trichloroborazoles
. organoboroxoles having a C₁-C₂₀ alkyl or aryl organic radical
. organoborazoles having a C₁-C₂₀ alkyl or aryl organic radical.

6. Process according to claim 5, characterized in that the boron derivatives containing a B-OH bond or precursors of boron derivatives containing a B-OH bond are boric acid H₃BO₃ or boric anhydride B₂O₃.

7. Process according to any one of claims 1 to 6, characterized in that the polyanhydroaspartic acid recovered on conclusion of the polymerization undergoes a purification step in order to remove the boron derivative.

8. Process according to claim 6, characterized in that the polyanhydroaspartic acid recovered on conclusion of the polymerization undergoes an aqueous washing step, followed by a step of filtration and of drying.

9. Process according to any one of claims 1 to 8, characterized in that the polyanhydroaspartic acid recovered at the end of the polymerization additionally undergoes a bleaching step.

10. Process according to claim 9, characterized in that the bleaching step uses an oxidizing agent of the hydrogen peroxide, hypochlorite, perborate or persalt type.
